# EUROPÄISCHE PATENTANMELDUNG

(11) **EP 1 080 971 A2**
(43) Veröffentlichungstag der Anmeldung: **07.03.2001**
(21) Anmeldenummer: 00115687.6
(22) Anmeldetag: 21.07.2000
(51) Int. Cl.: B60K 15/03

(54) **Kraftstoffbehälter und Verfahren zur Herstellung eines Kraftstoffbehälters**

(30) Priorität: 02.09.1999 DE 19941785
(71) Anmelder: Mannesmann VDO Aktiengesellschaft, 60388 Frankfurt am Main (DE)
(72) Erfinder: Distelhoff, Markus, Dr., 60594 Frankfurt (DE); Eck, Karl, 60318 Frankfurt (DE); Fröhlich, Winfried, 65520 Bad Camberg (DE); Keller, Dieter, 63743 Aschaffenburg (DE); Rumpf, Bernd, 61130 Nidderau-W. (DE); Klöker, Justus, Dr., 61267 Neu-Anspach (DE); Meyer, Knut, Dr., 45239 Essen (DE); Mohr, Ingo, 64287 Darmstadt (DE); Moser, Rainer, Dr., 6510 Idstein (DE); Sinz, Wolfgang, Dr., 65843 Sulzbach (DE)
(74) Vertreter: Rassler, Andrea, Dipl.-Phys.

(57) **Zusammenfassung**

Bei einem Kraftstoffbehälter (1) für ein Kraftfahrzeug sind aus Kunststoff im Spritzgußverfahren gefertigte und miteinander verschweißte Schalenteile (2, 3) zusätzlich mit einem Halteteil (6) formschlüssig miteinander verbunden. Die Montage des Halteteils (6) erfolgt nach dem Verschweißen der Schalenteile (2, 3). Der Kraftstoffbehälter (1) läßt sich damit kostengünstig fertigen und ist bei einem Crash des Kraftfahrzeuges gegen ein Auslaufen von Kraftstoff geschützt.

## Beschreibung

Die Erfindung betrifft einen Kraftstoffbehälter für ein Kraftfahrzeug mit aus Kunststoff gefertigten und miteinander verschweißten Schalenteilen. Weiterhin betrifft die Erfindung ein Verfahren zur Herstellung eines Kraftstoffbehälters, bei dem zunächst Schalenteile aus Kunststoff im Spritzgußverfahren gefertigt und die Schalenteile miteinander verschweißt werden.

Kraftstoffbehälter für heutige Kraftfahrzeuge sind in vielfältigen Formen aus der Praxis bekannt. Der Kraftstoffbehälter setzt sich aus zwei oder mehreren Schalenteilen zusammen, die vor dem Verschweißen beispielsweise mit Einsätzen versehen werden können. Das Verschweißen erfolgt meist dadurch, daß die Schweißstellen erwärmt und anschließend die Schalenteile zusammengedrückt werden. Hierdurch lassen sich die Kraftstoffbehälter insbesondere in der Serienfertigung bei großen Stückzahlen sehr kostengünstig fertigen.

Die Schweißnaht ist hierbei der sprödeste Bereich des Kraftstoffbehälters. Bei einem Crash des Kraftfahrzeuges kann der Kraftstoffbehälter jedoch verformt werden. Dies kann zu einem Aufplatzen der Schweißnaht und damit zu einem Auslaufen von Kraftstoff führen.

Man könnte daran denken, um den gesamten Kraftstoffbehälter Spannbänder zu legen, so daß die Schalenteile gegeneinander vorgespannt werden. Bei einem Crash des Kraftfahrzeuges können die Spannbänder jedoch den Kraftstoffbehälter einschnüren und ihn dadurch zusätzlich beschädigen.

Der Erfindung liegt das Problem zugrunde, einen Kraftstoffbehälter der eingangs genannten Art so zu gestalten, daß er bei einem Crash des Kraftfahrzeuges eine möglichst große Sicherheit gegen ein Auslaufen des Kraftstoffs bietet. Weiterhin soll ein Verfahren zur Herstellung eines gegen Auslaufen möglichst sicheren Kraftstoffbehälters geschaffen werden.

Das erstgenannte Problem wird erfindungsgemäß dadurch gelöst, daß die Schalenteile von zumindest einem im Bereich von Schweißnähten angeordneten Halteteil formschlüssig miteinander verbunden sind.

Durch diese Gestaltung hat der Kraftstoffbehälter durch das Halteteil eine Verstärkung der Schweißnaht. Hierdurch werden auf den Kraftstoffbehälter einwirkende Biege- und Zugkräfte von der Schweißnaht ferngehalten. Da das Halteteil nur im Bereich der Schweißnähte angeordnet ist, werden Beschädigungen des Kraftstoffbehälters durch das Halteteil weitgehend vermieden. Der erfindungsgemäße Kraftstoffbehälter bietet damit eine besonders hohe Sicherheit gegen ein Auslaufen nach einem Crash des Kraftfahrzeuges.

Das Halteteil könnte beispielsweise als einteilig mit einem der Schalenteile gefertigter Rasthaken gestaltet sein und in eine Ausnehmung des jeweils anderen Schalenteils eingreifen. Die Schalenteile lassen sich jedoch gemäß einer anderen vorteilhaften Weiterbildung der Erfindung ohne Behinderung durch das Halteteil miteinander verschweißen, wenn sie jeweils zumindest einen parallel zu den Schweißnähten angeordneten Vorsprung aufweisen und wenn die Vorsprünge zweier aneinandergrenzender Schalenteile von dem Halteteil hintergriffen sind. Hierdurch ist das Halteteil als separates Bauteil gestaltet, so daß es nach der Verschweißung der Schalenteile montiert werden kann. Ein weiterer Vorteil dieser Gestaltung besteht darin, daß das Halteteil aus einem anderen Material gefertigt sein kann als die Schalenteile. Zur Hintergreifung der Ränder der Schalenteile können wahlweise ein einzelnes Halteteil oder mehrere Halteteile eingesetzt werden.

Der erfindungsgemäße Kraftstoffbehälter gestaltet sich besonders kostengünstig, wenn das Halteteil aus Kunststoff im Spritzgußverfahren gefertigt ist.

Mechanische Belastungen werden gemäß einer vorteilhaften Weiterbildung der Erfindung besonders zuverlässig von der Schweißnaht ferngehalten, wenn das Halteteil ein Metallband aufweist.

Besonders hohe, auf die Schweißnaht einwirkende Zugkräfte lassen sich gemäß einer anderen vorteilhaften Weiterbildung der Erfindung besonders zuverlässig von dem Halteteil aufnehmen, wenn das Halteteil Fasern enthält. Als Fasern eignen sich beispielsweise Glasfasern, Kohlefasern oder Gewebefasern. Die Fasern können beispielsweise in Harz eingebunden oder mit den Schalenteilen verschmolzen sein.

Eine besonders schnelle Montage des Halteteils ergibt sich, wenn das Halteteil von einem chemisch aushärtenden Kunststoff gebildet ist.

Zur weiteren Sicherung des erfindungsgemäßen Kraftstoffbehälters gegen ein Auslaufen von Kraftstoff bei einem Crash des Kraftfahrzeuges trägt es bei, wenn aneinandergrenzende Vorsprünge zweier Schalenteile miteinander verschweißt sind.

Die Vorsprünge können nach außen hin von dem Kraftstoffbehälter abstehen. Der erfindungsgemäße Kraftstoffbehälter kann jedoch mit einer glatten Außenfläche versehen werden, wenn die Vorsprünge von in den Schalenteilen angeordneten Schwalbenschwanznuten gebildet sind.

Das zweitgenannte Problem, nämlich die Schaffung eines Verfahrens zur Herstellung eines gegen Auslaufen möglichst sicheren Kraftstoffbehälters, bei dem zunächst Schalenteile aus Kunststoff im Spritzgußverfahren gefertigt und die Schalenteile miteinander verschweißt werden, wird erfindungsgemäß dadurch gelöst, daß anschließend zumindest ein Vorsprünge von aneinandergrenzenden Schalenteilen formschlüssig hintergreifendes Halteteil montiert wird.

Durch die Montage des Halteteils als letzten Arbeitsgang bei der Fertigung des erfindungsgemäßen Kraftstoffbehälters wird das Verschweißen der Schalenteile nicht behindert. Die Schweißnaht wird durch das Halteteil verstärkt, so daß bei einem Crash des Kraftfahrzeuges auf den Kraftstoffbehälter und damit auf die Schweißnaht einwirkende Kräfte von dem Halteteil aufgenommen werden. Der mit dem erfindungsgemäßen Verfahren hergestellte Kraftstoffbehälter bietet damit einen besonders hohen Schutz gegen ein Auslaufen von Kraftstoff.

Das Halteteil läßt sich gemäß einer vorteilhaften Weiterbildung der Erfindung besonders schnell montieren, wenn zur Montage des Halteteils die Schalenteile im Bereich der Schweißnaht angeschmolzen und anschließend Fasern in die angeschmolzenen Bereiche eingedrückt werden. Die Vorsprünge können bei der Fertigung der Schalenteile angespritzt werden oder beim Eindrücken der Fasern erzeugt werden.

Undichtigkeiten der Schweißnaht führen gemäß einer anderen vorteilhaften Weiterbildung der Erfindung nicht zu einer Leckage des Kraftstoffbehälters, wenn zur Montage des Halteteils der Kraftstoffbehälter in eine Form eingesetzt wird und wenn anschließend die Vorsprünge mit Kunststoff umspritzt werden. Hierdurch kapselt das Halteteil die Schweißnaht ab.

Das erfindungsgemäße Verfahren führt zu einem besonders stabilen Kraftstoffbehälter, wenn zur Montage des Halteteils an die Vorsprünge jeweils ein Metallband gelegt wird und wenn zwei benachbarte Metallbänder miteinander verbunden werden.

Der Kraftstoffbehälter hat eine besonders hohe Sicherheit gegen ein Auslaufen von Kraftstoff, wenn in einander zugewandten, zum Verschweißen vorgesehenen Bereichen der Schalenteile jeweils eine Schwalbenschwanznut eingearbeitet wird und wenn anschließend in die Schwalbenschwanznut ein chemisch aushärtender Kunststoff eingespritzt wird. Hierdurch bildet der chemisch aushärtende Kunststoff eine Abdichtung der Schweißnaht.

Die Erfindung läßt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig.1: eine schematische Darstellung eines erfindungsgemäßen Kraftstoffbehälters in einem Teilschnitt,
- Fig.2, 3: Randbereiche von weiteren Ausführungsformen des erfindungsgemäßen Kraftstoffbehälters,
- Fig.4a - 4d: ein Verfahren zur Herstellung einer weiteren Ausführungsform des erfindungsgemäßen Kraftstoffbehälters.

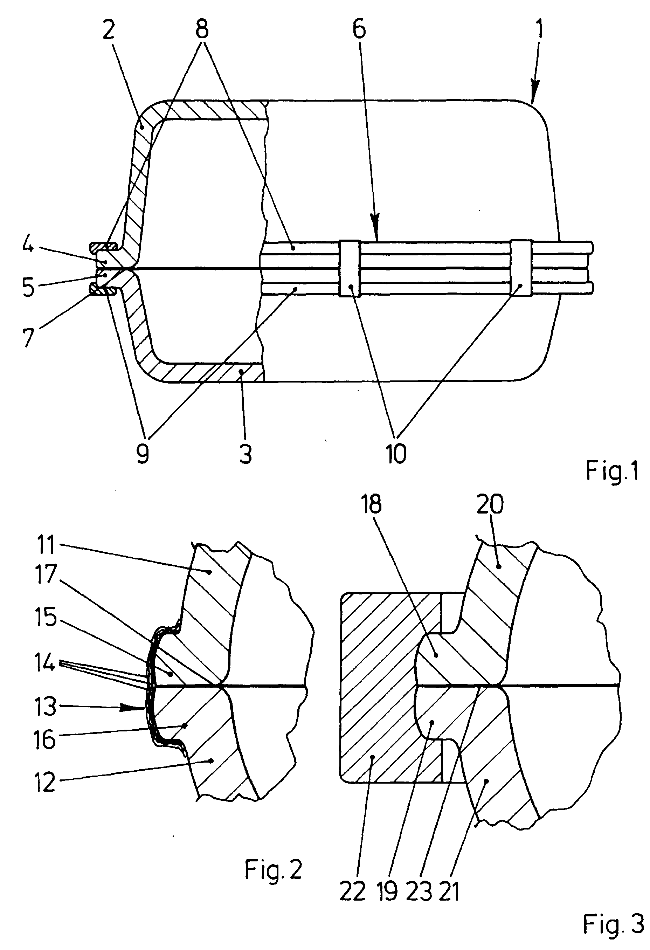

Die Figur 1 zeigt schematisch einen erfindungsgemäßen Kraftstoffbehälter 1 für ein Kraftfahrzeug mit zwei aus Kunststoff im Spritzgußverfahren gefertigten Schalenteilen 2, 3. Die Schalenteile 2, 3 weisen in ihren aneinandergrenzenden Bereichen einen umlaufenden Vorsprung 4, 5 auf. In diesem Bereich sind die Schalenteile 2, 3 miteinander verschweißt. Die Vorsprünge 4, 5 sind mittels eines Halteteils 6 gegeneinander vorgespannt. Zur Verdeutlichung ist eine Hälfte des Kraftstoffbehälters 1 geschnitten dargestellt. Das Halteteil 6 hat an den der Schweißnaht 7 abgewandten Bereichen der Vorsprünge 4, 5 anliegende Metallbänder 8, 9, die mittels Klammern 10 miteinander verbunden sind. Durch das Halteteil 6 wird die Schweißnaht 7 vor einer Beschädigung bei einem Crash des Kraftfahrzeuges geschützt.

Die Figur 2 zeigt einen Teilbereich einer weiteren Ausführungsform des erfindungsgemäßen Kraftstoffbehälters, bei dem ein Schalenteile 11, 12 formschlüssig miteinander verbindendes Halteteil 13 Fasern 14 enthält. Die Fasern 14 hintergreifen Vorsprünge 15, 16 der Schalenteile 11, 12. Zur Fertigung des erfindungsgemäßen Kraftstoffbehälters werden die Schalenteile 11, 12 zunächst wie ein bekannter Kraftstoffbehälter verschweißt. Anschließend wird der Bereich der Schweißnaht 17 bis zur Erweichung des Kunststoffs erwärmt und die Fasern 14 in den Kunststoff eingedrückt. Die Vorsprünge 15, 16 können wahlweise während des Eindrückens der Fasern 14 in dem Kunststoff erzeugt werden, oder die Schalenteile 11, 12 werden zusammen mit den Vorsprüngen 15, 16 aus Kunststoff im Spritzgußverfahren gefertigt.

Die Figur 3 zeigt einen Teilbereich einer weiteren Ausführungsform des erfindungsgemäßen Kraftstoffbehälters, bei dem Vorsprünge 18, 19 von Schalenteilen 20, 21 von einem aus Kunststoff im Spritzgußverfahren gefertigten Halteteil 22 hintergriffen sind. Zur Herstellung des Kraftstoffbehälters wird nach dem Verschweißen der Schalenteile 20, 21 der Kraftstoffbehälter in eine nicht dargestellte Spritzgußform eingesetzt und anschließend das Halteteil 22 gespritzt. Hierdurch umschließt das Halteteil 22 die Vorsprünge 18, 19 der Schalenteile 20, 21 und dichtet die Schweißnaht 23 ab.

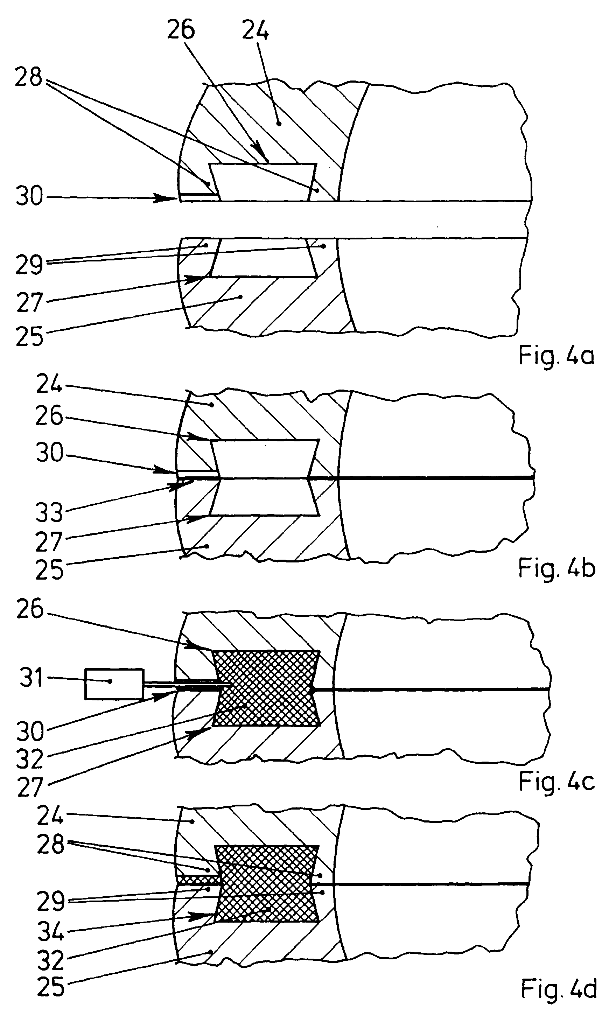

Die Figuren 4a - 4b zeigen ein erfindungsgemäßes Verfahren zur Fertigung einer weiteren Ausführungsform des Kraftstoffbehälters. In Figur 4a sind Randbereiche zweier miteinander zu verbindender Schalenteile 24, 25 dargestellt. Die Schalenteile 24, 25 weisen an ihren einander zugewandten Bereichen jeweils eine Schwalbenschwanznut 26, 27 auf. Die Schwalbenschwanznuten 26, 27 haben in ihren seitlichen Bereichen jeweils Vorsprünge 28, 29. Eines der Schalenteile 24 hat eine Ausnehmung 30 zur Durchführung der in Figur 4c dargestellten Injektionsnadel 31. Die Schalenteile 24, 25 werden im Bereich der Schwalbenschwanznuten 26, 27 erwärmt, bis der Kunststoff schmilzt, und anschließend zusammengedrückt. Hierdurch werden die Schalenteile 24, 25 miteinander verschweißt. Dieser Zustand ist in Figur 4b dargestellt. Anschließend wird, wie Figur 4c zeigt, mittels einer Injektionsnadel 31 durch die Ausnehmung 30 chemisch aushärtender Kunststoff 32 in den durch die Schwalbenschwanznuten 26, 27 erzeugten Hohlraum eingespritzt. Wie Fig.4d zeigt, bildet nach einem Herausziehen der Injektionsnadel 31 und einem Aushärten der Kunststoff 32 ein Halteteil 34, das die Schalenteile 24, 25 im Bereich der Schweißnaht 33 formschlüssig hintergreift.

## Patentansprüche

1. Kraftstoffbehälter für ein Kraftfahrzeug mit aus Kunststoff gefertigten und miteinander verschweißten Schalenteilen, **dadurch gekennzeichnet,** daß die Schalenteile (2, 3, 11, 12, 20, 21, 24, 25) von zumindest einem im Bereich von Schweißnähten (7, 17, 23, 33) angeordneten Halteteil (6, 13, 22, 34) formschlüssig miteinander verbunden sind.

2. Kraftstoffbehälter nach Anspruch 1, **dadurch gekennzeichnet,** daß die Schalenteile (2, 3, 11, 12, 20, 21, 24, 25) jeweils zumindest einen parallel zu den Schweißnähten (7, 17, 23, 33) angeordneten Vorsprung (4, 5, 15, 16, 18, 19, 28, 29) aufweisen und daß die Vorsprünge (4, 5, 15, 16, 18, 19, 28, 29) zweier aneinandergrenzender Schalenteile (2, 3, 11, 12, 20, 21, 24, 25) von dem Halteteil (6, 13, 22, 34) hintergriffen sind.

3. Kraftstoffbehälter nach Anspruch 1 oder 2, **dadurch gekennzeichnet,** daß das Halteteil (22) aus Kunststoff im Spritzgußverfahren gefertigt ist.

4. Kraftstoffbehälter nach zumindest einem der vorhergehenden Ansprüche, **dadurch gekennzeichnet,** daß das Halteteil (6) ein Metallband (8, 9) aufweist.

5. Kraftstoffbehälter nach zumindest einem der vorhergehenden Ansprüche, **dadurch gekennzeichnet,** daß das Halteteil (13) Fasern (14) enthält.

6. Kraftstoffbehälter nach zumindest einem der vorhergehenden Ansprüche, **dadurch gekennzeichnet,** daß das Halteteil (34) von einem chemisch aushärtenden Kunststoff (32) gebildet ist.

7. Kraftstoffbehälter nach zumindest einem der vorhergehenden Ansprüche, **dadurch gekennzeichnet,** daß aneinandergrenzende Vorsprünge (4, 5, 15, 16, 18, 19, 28, 29) zweier Schalenteile (2, 3, 11, 12, 20, 21, 24, 25) miteinander verschweißt sind.

8. Kraftstoffbehälter nach zumindest einem der vorhergehenden Ansprüche, **dadurch gekennzeichnet,** daß die Vorsprünge (28, 29) von in den Schalenteilen (24, 25) angeordneten Schwalbenschwanznuten (26, 27) gebildet sind.

9. Verfahren zur Herstellung eines Kraftstoffbehälters, bei dem zunächst Schalenteile aus Kunststoff im Spritzgußverfahren gefertigt und die Schalenteile miteinander verschweißt werden, **dadurch gekennzeichnet,** daß anschließend zumindest ein Vorsprünge von aneinandergrenzenden Schalenteilen formschlüssig hintergreifendes Halteteil montiert wird.

10. Verfahren zur Herstellung eines Kraftstoffbehälters nach Anspruch 9, **dadurch gekennzeichnet,** daß zur Montage des Halteteils die Schalenteile im Bereich der Schweißnaht angeschmolzen und anschließend Fasern in die angeschmolzenen Bereiche eingedrückt werden.

11. Verfahren zur Herstellung eines Kraftstoffbehälters nach Anspruch 9 oder 10, **dadurch gekennzeichnet,** daß zur Montage des Halteteils der Kraftstoffbehälter in eine Form eingesetzt wird und daß anschließend die Vorsprünge mit Kunststoff umspritzt werden.

12. Verfahren zur Herstellung eines Kraftstoffbehälters nach zumindest einem der vorhergehenden Ansprüche, **dadurch gekennzeichnet,** daß zur Montage des Halteteils an die Vorsprünge jeweils ein Metallband gelegt wird und daß zwei benachbarte Metallbänder miteinander verbunden werden.

13. Verfahren zur Herstellung eines Kraftstoffbehälters nach zumindest einem der vorhergehenden Ansprüche, **dadurch gekennzeichnet,** daß in einander zugewandten, zum Verschweißen vorgesehenen Bereichen der Schalenteile jeweils eine Schwalbenschwanznut eingearbeitet wird und daß anschließend in die Schwalbenschwanznut ein chemisch aushärtender Kunststoff eingespritzt wird.
